# EUROPEAN PATENT APPLICATION

(11) **EP 1 335 558 A1**
(43) Date of publication of application: **13.08.2003**
(21) Application number: 02405078.3
(22) Date of filing: 06.02.2002
(51) Int. Cl.: H04L 29/06

(54) **Methods and apparatus for secure data management, secure data retrieval and routing**

(71) Applicant: SwissSign AG, 8001 Zürich (CH)
(72) Inventor: Hauber, Michael, 8702 Zollikon (CH); Doujak, Michael, 8103 Unterengstringen (CH); Doekbrijder, Joseph A., 8700 Küsnacht (CH)
(74) Representative: Patentanwälte Schaad, Balass, Menzl & Partner AG

(57) **Abstract**

The invention relates to a method, an apparatus and a system for secure data management, secure data retrieval and routing over unsecured and unreliable data channels, using a public key infrastructure. A requestor (4) sends a request message requesting information on an individual (6) to the inventive apparatus, the Secure Information Request Broker unit SIRB . The SIRB , upon receipt of the request message and an authorisation of the individual (6) itself or another authorised approver, sends the request message to at least one data repository (3) known to store the requested data. The data repository (3) checks the request message and formulates an answer message which is sent back to the SIRB (2) and forwarded by the SIRB (2) to the requestor (4). The messages exchanged between the different modules are each digitally signed by the module sending the message and encrypted for the intended direct and indirect recipient.

## Description

The invention relates to methods for secure data management, secure data retrieval and routing over unsecured and unreliable data channels according to claims 1, 17 and 18, to a Secure Information Request Broker unit for carrying out the method of claim 1 according to claim 9 and to a system for secure data management, secure data retrieval and routing over unsecured and unreliable data channels according to claim 12.

Information about individuals is being stored in a constantly growing number of systems. Each of these systems has individual access control mechanisms that protect the data from being accessed without proper authorisation. While such protection is adequate for the individual system, it does not provide the mechanisms to share such data over data networks with other entities within the same organisation or outside of it.

A Public Key Infrastructure provides the required infrastructure to create digital identities for both natural persons and legal entities. It forms the framework to protect digital information through encryption and digital signature.

Information repositories, also called data repositories, are a recent development. They are used in the public space of the Internet as well as internally for corporations or government bodies. Data repositories combine personal information with cryptographic keys to allow the identification of an entity in an electronic context. The cryptographic key or the electronic identity of an individual serves as a locator for the data associated with this individual and stored in the data repository.

It is an object of the invention to provide authenticated and authorised access to data over unsecure and unreliable data channels. It is a further object of the invention to provide an apparatus for carrying out this method.

This object is achieved by a method according to claim 1, 17 and 18, an apparatus for carrying out this method according to claim 9 and a system according to claim 12. Preferred embodiments of the invention are described in the dependent claims, the description and the drawings.

The invention combines digital signature, public key encryption as specified in the public key cryptography standard (PKCS#n) and data routing technology to facilitate secure, reliable, authenticated, authorised and anonymous data exchange over unsecured and unreliable data channels.

According to the invention, a requestor sends a request message requesting information associated with an individual directly or indirectly to the inventive apparatus, i.e. the Secure Information Request Broker unit (SIRB). The SIRB, upon receipt of the request message and an authorisation of the individual itself or another authorised delegate, sends the request message to at least one data repository known to store the requested data. The data repository checks the request message and formulates an answer message which is either sent back to the SIRB and forwarded by the SIRB to the requestor or sent directly to the requestor. The messages exchanged between the different modules are each digitally signed by the module sending the message and encrypted for the intended direct and indirect recipients. The authorisation is preferably entered at the external terminal, where the approver reviews and authorises the request by adding his own digital signature.

The inventive method is based on a public key infrastructure and uses a Secure Information Request Broker unit (SIRB) for routing request and answer messages. The SIRB may be implemented on a computer. The SIRB receives a request message from the external terminal. Preferably a TCP/IP network (e.g. the internet) serves as a medium for data transmission from or to the SIRB. The request message comprises a description of information requested by a requestor and associated with an individual, i.e. a natural person or a legal entity. The SIRB further receives an authorisation, preferably comprised in the request, permitting the requestor to access the requested information. The authorisation is either issued by the individual itself or by an authorised delegate who is entitled by the individual or by law to grant access to the individual's data. The SIRB verifies the origin of the request message and the authorisation, derives from the request message the description of the requested information and derives from said description at least one data repository. The SIRB then sends the request message to the at least one data repository. The data repository processes the request and generates an answer message, which is then sent to the SIRB. The answer message comprises the requested information encrypted for the requestor. The SIRB receives the answer message, and sends the answer message to the requestor. Alternatively, the data repository may send the answer message directly to the requestor. To guarantee authorised and authenticated access, the messages exchanged between the SIRB, the data repository, the external terminal and/or the requestor are digitally signed by the module which sends the message and encrypted for the module which receives the message. Certificates are enclosed in requests or at least a unique pointer to the certificate is included such that each module is able to look up the certificate by itself.

The receiving steps comprise the steps of decrypting the message and verifying the digital signature or signatures attached thereto. The sending steps comprise the steps of attaching to the message the digital signature of the module which sends the message and encrypting the message for the module which is the intended recipient of the message. The request message, for example, is signed by the requestor and by the individual or authorised delegate. The latter signature serves as authorisation of the request. It is further signed by the external terminal and encrypted for the intended recipient, i.e. the SIRB. The answer message, for example, is optionally signed by the data repository and mandatory encrypted for the requestor and then signed a second time by the data repository and encrypted for the SIRB. This enables the SIRB to check the correctness of the transaction but prevents the SIRB from accessing the transmitted data. When forwarding the answer message to the requestor the SIRB decrypts the answer message with its own private key, verifies the data repository signature and signs the message and encrypts it with the public key of the requestor. These measures enable the requestor to validate the correct origin of the message and to access the data transmitted therewith, while the SIRB cannot access the data.

To associate anonymous certificates with personal information, the SIRB platform uses a variety of data repositories. The certificate of the individual serves as a key to locate the appropriate information in the data repository and a digital signature is required to authorise the request to access the information.

The authorisation preferably comprises the digital signature of the individual. "Online" request messages include the authorisation when first sent to the SIRB. "Offline" request messages are sent to the SIRB without authorisation, and the SIRB then analyses the request message to identify the individual, invites the individual to authorise the request and verifies the authorisation, after the individual followed the invitation. In case the SIRB does not receive an authorisation within a given time, the request message is dismissed.

The main benefits of the invention are that access to classified and/or personal information is controlled based on the needs of the individual and mostly by of the individual itself. The person the information is about preferably authorises the retrieval or modification of personal information. In addition, access may be controlled based on legal or security considerations, preferably by checking whether a given combination of requestor and requested data is admissible. Furthermore, the invention allows the authentication of a person. It further allows for protection of the privacy of a person, as requests and answers can be anonymised.

Of course it is possible to use the invention within an organisation but it should be understood, that the design has been targeted for the internet and the measures taken to make the architecture safe and reliable go way beyond what would be deemed necessary within the confines of a protected network.

Further objects and advantages of the present invention will appear when the following description is considered together with the drawings, in which
- Fig. 1: shows schematically the inventive system with all major components and potential communication paths;
- Fig. 2: shows schematically the inventive Secure Information Request Broker unit.

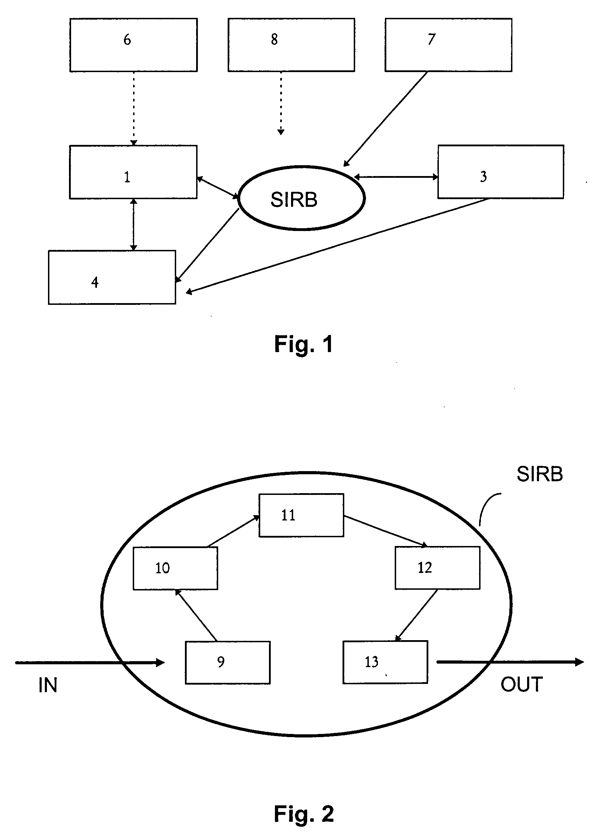

Fig. 1 shows the architecture of the inventive system which comprises a Secure Information Request Broker unit SIRB, at least one external terminal 1 and at least one data repository 3. Fig. 1 further shows a requestor 4 requesting information about an individual, and an approver 6, normally the individual itself. A delegation repository 7 stores access profiles for certain types of requestors. The inner structure of the SIRB is shown in fig. 2. The possible communication paths between the respective units are indicated with arrows. A data network (preferably the Internet) serves as a transmission medium for communication between the SIRB, the external terminal 1 and the data repository 3.

The SIRB implements the basic information routing and brokerage function. Any request message sent to the SIRB is checked for origin of the requestor 4 and the individual 6, for credentials and authorisation (again of requestor 4 and the individual 6). The SIRB then derives from an internal list of data repositories at least one data repository 3 and sends the request to every one, which matches the criteria. The forwarded request contains an option, defining whether the answer should be sent to the SIRB or to any other destination, e.g. directly to the requestor 4. If the information is neither to be encryped for the SIRB, nor for the requestor 4, an encryption key has to be provided in the request.

The SIRB is also capable of anonymising requests for one, two or all of the parties involved (anonymous requestor, anonymous answers and anonymous entities) to protect their identities from each other. Anonymity may be implemented by either deleting the information about the identity of the entity seeking anonymity, mapping the identity of the entity to an identity known only by the SIRB or having the SIRB acting on behalf of that party. It is up to the information provider to define which of the schemes can be accepted.

The SIRB is able to store repeated requests or longtime requests, which are good for more than one access or more than one requestor. The SIRB is also able to store offline requests, which are not yet authorised by the individual. Furthermore, the SIRB allows the individual 6 to tighten or loosen the access to its personal data.

To allow for a legal provable situation, SIRB logs all access and data transactions being performed. As data coming from the data repositories 3 is encrypted this does not imply that data is logged which should not be revealed.

The specification of the requested data by the requestor is preferably done by specifying the storage location of the information. Requestors preferably use data locators, e.g. a URL like notation. The different parts of a data locator identify a data repository or a group of data repositories or an alias or a logical term identifying a data repository type and parts of the structure of the given data repository or any aliases of it. Other data locators like ANSI-SQL Select statements or any other address schema might be used as well.

The following objects are the endpoints of the later defined processes:

The requestor 4 is a person or legal entity that requires information. The requestor's function is implemented by software of the requestor's choice, e.g. a rent-a-car company and its reservation computer.

The individual is the natural person or legal entity the requested information is associated with. The individual is not necessarily the information owner, as the individual might not have any influence on the stored information, e.g. information stored in official records. In most cases the individual has ultimate control about who should get access to the information in question. In most situations other authorisation authorities can only further restrict access but cannot overrule the statement of the individual.

It is up to the individual to loosen its control on certain information. However legal and security considerations may prevent too open access to critical information by implementing more stringent restrictions on the data repository 3 and/or the SIRB.

Any request for information to the SIRB needs to be approved by an approver 6. In most cases the approver is the individual the information is. associated with. However there are some circumstances where requests can be approved by an authorised delegate, e.g. if the individual has delegated the right to approve to a third person. The authorisation module 11 in the SIRB and the data repository 3 check whether the requested data is to be provided in that special case.

Any person or legal entity that is supplying information to the inventive system is called an information provider. The information is provided by virtue of a data repository 3. The implementation of data repositories 3 is done on equipment of the information provider. Every data repository 3 implements its own security and access control mechanism.

Multiple data repositories 3 supplying similar information, e.g. all medical insurance companies, can be maintained as a group within the inventive system. The SIRB then routes the requests to all group members and routes the response back to the requestor. In special cases this response will be adapted or consolidated. For example, a request with the question: "is there a medical insurance of the person?" might be answered with "yes" instead of "Name of the insurance company".

It is possible to define roles like "medical personnel", who have certain access rights. Such roles are managed by providing a repository 7, which allows the SIRB to decide on the membership of an individual to a role. The role and its access profile has to be negotiated with the management of the data repository 3 that role should have access to.

The external terminal 1 is the interface to the SIRB. It comprises means for receiving a request and displaying it such that the approver can check it. The external terminal further comprises means for entering data, such as the certificate of the approver and data identifying the user and activating the certificate. For example may the certificate be stored on a smart card, and the approver has to enter a PIN code to enable the external terminal to communicate with the smart card. The external terminal further comprises means for signing, encrypting and sending a request message. The external terminal 1 can be built in hard- or software and is classified by its security strength. External terminals can range from software only versions up to hardware solutions in a tamper proof box. The security of the external terminal and therefore the protection is preferably taken into consideration for the authorisation of a request. A financial transaction may, for example, require a tamper proof external terminal.

The request message may be entered at a different module and sent to the external terminal or entered directly at the external terminal 1.

The external terminal 1 handles offline requests and displays the active offline requests as soon as the individual 6, which needs to authorise the request, uses the terminal 1.

The components of the SIRB are described with reference to Fig. 2.

The input manager 9 decrypts all incoming messages and validates all signatures of the datagrams, It then presents the information to the control unit 10. The control unit 10 is primarily the information broker engine which does all necessary replacements as preparation for the authorisation module 11. For example, it enriches all placeholder information like roles and groups by the real identities of the correct entities. The control unit 10 also manages the technical information about groups of entities (e.g. "all banks") and about how to reach the data repositories and delegation repositories.- Further, the control unit 10 is the manager of all internal lookup tables, like who did delegate which right to whom.

The authorisation module 11 allows the SIRB to guarantee that requests are only forwarded following the guidelines built upon legal restrictions, data security laws and security considerations. It is up to the legal authorities 8 to verify the accuracy of those rules. The authorisation engine 11 is the interface allowing these authorities 8 to access the rules without accessing the protected data. The datagrams are presented enriched with all information to make sure that the authorisation engine can allow or deny access to data based on the correct and complete information.

In special cases the identity of the individual the information is about is not to be revealed, not even to the data repository. However, without any information about the individual the data repository does not find the requested information. Therefore a mapping engine 12 allows to replace the real identity of the entity by a mapped identity. The data repository 3 does find information about the individual, but does not get to know the individual's identity.

The output manager 13 of the SIRB signs outgoing messages with the private key of the SIRB and encrypts the data with the public key of the recipient.

All messages exchanged between the various modules of the system are preferably signed and encrypted using public key technology and X.509 certificates.

A typical online request is now discussed with reference to fig. 1. The requestor 4 prepares a request consisting of the description of the information to be requested. The request is signed by the requestor and encrypted with the public key of the external terminal 1. This request message is then sent to the external terminal 1. The external terminal 1 decrypts the message and verifies the signature of the requestor 4. The external terminal 1 adds the ID of the individual 6 that has been copied from the individual's 6 certificate and presents the whole request to the individual 6 or authorised delegate. Upon approval, the request is digitally signed by the individual 6 respectively delegate and further signed by the external terminal 1. The request is then encrypted with the SIRB's public key and sent to the SIRB. The SIRB decrypts the message and checks the signatures of requestor 4, individual 6 and the external terminal 1. It then checks with the authorisation module 11, whether the combination of requested data, requestor 4, individual 6 and external terminal 1 is admissible. If said combination is admissible, the SIRB signs the request and sends it to the data repository 3, encrypted with the data repository's public key.

The data repository 3 decrypts the message and verifies the signatures of the SIRB, the requestor 4, the external terminal 1 and the individual 6. After that the data repository 3 checks whether the combination of requestor, individual 6 and external terminal 1 is authorised to access that data.

It is important to understand that SIRB and data repository 3 are under the control of different entities and that repeated checks of the same information allow for a distributed approach to authorisation management.

The data repository composes an answer message which includes the requested data. The answer message is then signed and encrypted with the key of the requestor 4. The whole package, preferably also including information about success of the operation, is then signed again and sent back to the SIRB, encrypted with the public key of the SIRB. The double encryption ensures that the SIRB is unable to access the requested information intended for the requestor 4.

Upon receipt of the answer message, the SIRB verifies the signature of the data repository 3, decrypts the message and logs it. It then signs it with its own key, encrypts it with the public key of the requestor 4 and sends it to the requestor 4.

The requestor 4 verifies the signature of the SIRB and decrypts the message. It then decrypts the content of the message and verifies the signature of the data repository 3.

An "offline request" can be used to request approval for data retrieval from an individual or approver that is not available online. The requestor flags the request as an offline request and sends it to an external terminal where it is automatically forwarded to the SIRB. The SIRB authorises the request, deletes the signature of the external Terminal and stores the request until the individual or an authorised delegate is willing to review pending offline requests at an external terminal or a certain time interval has expired.

Apart from the online and offline mode, there are two general types of requests, i.e. "individual based requests" and "external delegated requests". An "individual based request" is a request for data which has to be approved by the individual the information is about or by persons the individual has delegated the right to. "External delegated requests" are based on external access rights and do in online mode not need the direct approval of the individual.

The "individual based request" allows a requestor to ask for personal information about an individual present. The individual immediately authorises the request at the external terminal 1. The SIRB reviews the request, and if the authorisation module 11 approves, the request is routed by the SIRB to the appropriate data repositories 3. As the individual is present when the request is formulated, the requestor does not need to know the ID of the individual and will not necessarily get that information during the whole process. The ID is entered by the individual itself at the external terminal 1. The ID also enables the SIRB to locate the requested data.

It is also possible that an individual delegates authorisation to access its personal data to other individuals or to members of a delegation repository. The delegation itself has to be done by the individual at the authorisation module. This "individual delegated request" is used to access data of the individual, using the delegated access rights. The SIRB retrieves these access rights and attaches them to the request. For example, an individual could issue full authorisation on all medical information for all the members of the delegation repository for medical doctors. Another example would be to allow members of the family to access personal data.

"External delegated requests" can be issued by requestors that have an official function and have been given permission to override certain authorisation restrictions. For example, this type of request could be used to allow a doctor in an intensive care unit access to medical information. Both the SIRB and the data repository 3 verify if the credentials presented by requestor and authoriser are sufficient to retrieve the requested information.

The SIRB accepts "external delegated requests", if the request carries the authorisation of an authorised delegate, e.g. a member of the delegation repository 7. To verify the authorisation, the SIRB requests information about the authoriser at the delegation repository 7 in question. This information is attached to the request, to allow the authorisation module 11 and the data repository 3 to judge that the request is legitimate. The data repository 3 can verify proper authorisation because preferably only a well-defined group of delegation repositories 7 is acceptable for delegated requests.

Every request can have an option allowing the requestor to reuse the approval of that request. Preferably, this option needs to be specifically approved by the approver or the individual. With that option the requestor is allowed to request the same information multiple times up to a specific count or a maximum time.

Every request can have an option requesting multiple approvals. Approvers can be the individual, other persons or groups and roles, e.g. all doctors of a specific hospital. It is possible to impose restrictions on the request as to which external terminals may be used and in what timing fashion every approval is given. For example, it can be mandatory that all approvers are in the same room and approve a certain request at the same time.

Every party can ask for anonymous access. In this case the information about the party is stripped before being sent to the next module. Identity mapping is an additional way to provide anonymity.

The SIRB can send an update request message to every data repository indicating that the ID of the public key of an individual has been changed.

In another preferred embodiment of the invention the SIRB allows the external terminal 1 to make a security check for a request. This enables the individual 6 to ask the SIRB whether the request has to be considered harmful. The information is derived from information from the data protection authority and the customer protection agencies.

Various reasons can lead to an erroneous state in a transaction. To resolve such a state the following precautions are taken: All Processes have a "failsafe" in case a transaction exceeds a time limit. If a process detects a condition preventing the successful conclusion of the transaction it will immediately send an appropriate message back to the requestor.

The following transaction will be used to explain the SIRB transactions in an exemplary realisation.

During a visit to the doctor, a patient receives a prescription for medication. The doctor also proposes an additional visit with a specialist at a local hospital. The following transactions take place:

The doctor enters the information about the medication into an internal system. The internal system sends a request to the external terminal 1, which may also be part of the internal system, to retrieve healthcare information from the patient. The patient authorises the request using his digital signature. The external terminal 1 forwards the request to the SIRB, which in its turn forwards it to the appropriate healthcare data repositories 3. The data repository 3 verifies the identity of the patient and provides the requested information. Later, the patient visits a drugstore. The prescription is retrieved from a data repository 3 based on a request formulated by the drugstore system and the proper signature from the patient. The drugstore requires healthcare information and formulates a second request, similar to the doctor's request, and sends it using the inventive infrastructure. Using the retrieved information the drugstore executes the financial transaction and receives the money owed. Meanwhile, the doctor has advised the hospital of the transfer and the hospital has entered an offline request for the patient's healthcare information. The external terminal at the drugstore offers the patient to answer the offline request from the hospital.

## Claims

1. A method for secure data management, secure data retrieval and routing over unsecured and unreliable data channels, using a public key infrastructure,
wherein a Secure Information Request Broker unit (SIRB)
- receives a request message from an external terminal (1), the request message comprising a description of information associated with an individual (6) requested by a requestor (4);
- receives an authorisation authorising the requestor (4) to access the requested information;
- verifies the origin of the request message and the authorisation;
- derives from the request message the description of the requested information and derives from said description at least one data repository (3);
- sends the request message to the at least one data repository (3);
wherein the messages exchanged between the Secure Information Request Broker unit (SIRB), the data repository (3), the external terminal (1) and/or the requestor (4) are digitally signed by the module which sends the message and encrypted for the module or modules which receives the message, and wherein the receiving steps comprise the steps of decrypting the message and verifying the digital signature or signatures attached thereto, and wherein the sending steps comprise the steps of attaching the digital signature of the module which sends the message and encrypting the message for the module or modules which receive the message.

2. Method according to claim 1, wherein the authorisation is included in the request message.

3. Method according to claim 1, wherein the request message does not comprise an- authorisation, further comprising the steps of the Secure Information Request Broker unit (SIRB) storing the request message and sending a message to an external terminal (1) comprising information on the requestor (4), on the requested data and an invitation for the individual (6) or an authorised delegate to authorise the request.

4. Method according to one of the preceding claims, further comprising the step of the Secure Information Request Broker unit (SIRB)
- receiving an answer message from the at least one data repository (3), the answer message comprising the requested information encrypted for the requestor (4), and
- sending the answer message to the requestor (4).

5. Method according to one of the preceding claims, further comprising the step of the Secure Information Request Broker unit (SIRB) checking the admissibility of the request, preferably by checking whether the requestor (4) is allowed to request the requested information on the individual (6) according to predetermined rules.

6. Method according to one of the preceding claims, further comprising the step of the Secure Information Request Broker unit (SIRB) verifying the authorisation of the requestor (4) by verifying a digital signature of the individual (6) or an authorised delegate, which has been included in the request message.

7. Method according to one of the preceding claims, further comprising the step of the Secure Information Request Broker unit (SIRB) anonymising a request and/or answer message, preferably by deleting the information about the identity of the unit seeking anonymity and/or mapping the identity of the unit seeking anonymity to an identity known only to the Secure Information Request Broker unit and/or by the Secure Information Request Broker unit acting on behalf of the unit seeking anonymity.

8. Method according to one of the preceding claims, further comprising the steps of the Secure Information Request Broker unit (SIRB) logging all transactions being performed.

9. Secure Information Request Broker unit for carrying out the method according to one of the preceding claims, comprising
- an input manager unit (9) capable of decrypting incoming messages and verifying digital signatures contained therein;
- a control unit (10) capable of determining from the description of the requested information at least one data repository (3);
- an output manager unit (13) capable of signing outgoing messages with the digital signature of the Secure Information Request Broker unit (SIRB) and encrypting them for the receiving unit.

10. Secure Information Request Broker unit according to claim 9, further comprising an authorisation unit (11) capable of determining whether the combination of requested information, requestor (4) and individual (6) is admissible according to predetermined rules and capable of granting or denying access to the requested information.

11. Secure Information Request Broker unit according to claim 9 or 10, further comprising a mapping unit (12) capable of replacing the identity of an entity by a anonymised mapped identity.

12. A system for secure data management, secure data retrieval and routing over unsecured and unreliable data channels, using a public key infrastructure, comprising
- at least one external terminal (1) having a user interface for displaying and entering data and having means for receiving, signing, encrypting and sending an encrypted request message;
- at least one Secure Information Request Broker unit (SIRB) having means for receiving a request message from the at least one external terminal, means for deriving from the request message data relating to the identity of the requestor and to the requested information, means for verifying the authorisation of the requestor, means for sending the request message to a data repository.

13. System according to claim 12, wherein the Secure Information Request Broker unit (SIRB) further comprises means for receiving an answer message from the data repository (3) and means for forwarding the answer message to the external terminal (1) or to the requestor (4).

14. System according to claim 12 or 13, wherein the data entered at the external terminal (1) or sent to the external terminal (1) comprise a description of information requested by a requestor (4) and an identification of the requestor (4).

15. System according to claim 12, 13 or 14, wherein the data entered at the external terminal (4) comprise authorising information entered by the individual (6).

16. System according to one of claims 12-15, further comprising at least one data repository (3).

17. A method for secure data management, secure data retrieval and routing over unsecured and unreliable data channels, using a public key infrastructure,
wherein an external terminal (1)
- receives a request message from a requestor (4), the request message comprising a description of information associated with an individual (6) requested by the requestor (4);
- displays the content of the request message;
- receives a digital signature by the individual and attaches it to the request message;
- encrypts the request message for a Secure Information Request Broker unit (SIRB);
- sends the encrypted request message to the Secure Information Request Broker unit (SIRB).

18. A method for secure data management, secure data retrieval and routing over unsecured and unreliable data channels, using a public key infrastructure,
wherein a requestor
- generates a request message comprising a description of information associated with an individual (6), signs it digitally and encrypts it for the intended recipient;
- sends the request message to an external terminal or to a Secure Information Request Broker unit (SIRB).

19. Method according to claim 18, wherein the requestor receives an answer message comprising the requested information, which is encrypted with the requestor's public key, decrypts it and verifies the digital signatures attached to it.
